# FASCICULE DE BREVET EUROPEEN

(11) **EP 0 622 144 B1**
(45) Date de publication et mention de la délivrance du brevet: **11.06.1997**
(21) Numéro de dépôt: 94200611.5
(22) Date de dépôt: 10.03.1994
(51) Int. Cl.: B23B 51/00

(54) **Outil de fraisage et dispositif de perçage, permettant notamment le perçage de parois de tuyauteries**
Fräswerkzeug und Bohrvorrichtung, zum Anbohren von Röhren
Milling cutter and drilling device, for drilling holes in pipes

(30) Priorité: 22.03.1993 BE 9300272
(43) Date de publication de la demande: 02.11.1994
(73) Titulaire: POLVA PIPELIFE B.V., 1600 AJ Enkhuizen (NL)
(72) Inventeur: Karreman, Peter, NL-1602 RC Enkhuizen (NL); Karreman, Jacob, NL-1601 NN Enkhuizen (NL)
(74) Mandataire: de Bruijn, Leendert C.

(56) Documents cités:
- CH-A- 373 245
- CH-A- 407 704
- DE-A- 1 602 833
- FR-A- 1 402 916
- FR-A- 2 003 084
- US-A- 2 442 554
- US-A- 3 022 686
- US-A- 3 645 641
- US-A- 3 870 431

## Description

La présente invention concerne un outil de fraisage selon le préambule de la revendication 1. Un tel outil est connu du document DE-A-1602833 et permet notamment, lors de l'installation d'un raccord de dérivation sur une tuyauterie en service, de percer la paroi de celle-ci sans que les déchets ainsi produits ne pénètrent dans la tuyauterie ou ne risquent de perturber le bon fonctionnement ultérieur du raccord.

Dans les brevets belges BE-A-819 846, BE-A-833 318 et BE-A-833 431, on a déjà proposé des raccords de dérivation pour tuyauteries en matière thermoplastique comportant un élément (a) en forme de selle équipé de moyens permettant sa fixation autour de la tuyauterie à dériver et un élément tubulaire de raccordement (b) en forme de T, dont l'une des extrémités est raccordée à l'élément (a) en forme de selle et dont l'extrémité opposée est équipée d'un dispositif d'obturation étanche et amovible, l'extrémité de la branche latérale de l'élément (b) étant pourvue de moyens permettant son raccordement à une canalisation de dérivation. Un procédé typique d'installation de ce raccord consiste, successivement, à l'installer sur la tuyauterie principale, à connecter la canalisation de dérivation à l'extrémité de sa branche latérale, à insérer dans l'extrémité libre du raccord en T un outil de perçage, à percer la paroi de la tuyauterie principale, à retirer l'outil de perçage et à obturer l'extrémité libre du raccord en T par le dispositif d'obturation prévu. Un tel procédé de raccordement permet de raccorder une canalisation de dérivation à une tuyauterie principale sans devoir y interrompre la circulation du fluide véhiculé, ce qui est particulièrement commode. Un domaine d'application courant de tels dispositifs est la distribution de gaz naturel par des tuyauteries constituées d'une matière thermoplastique telle que le polyéthylène.

Pour éviter que le fluide transporté ne s'échappe vers l'extérieur une fois que la tuyauterie principale est percée, avant que le perçage ne soit complètement terminé, que l'outil de perçage n'ait été retiré et que le dispositif d'obturation du raccord n'ait été installé, diverses solutions ont été proposées, qui consistent de manière simplifiée à prévoir, dans l'élément tubulaire en forme de T, une sorte de clapet ou autre organe d'obturation déformable évitant les fuites.

Cette technique de raccordement présente cependant un inconvénient sur le plan de l'opération de perçage proprement dite. En effet, les outils de fraisage utilisés jusqu'ici sont, de manière simplifiée, des cylindres creux dont le bord présente une ou plusieurs dents acérées, semblables à des scies à cloches, comme illustrés par exemple dans le brevet US 3 870 431. De tels outils pratiquent une découpe annulaire dans la paroi de la tuyauterie à percer, en libérant un petit disque de celle-ci (appelé "coupon") et en générant des copeaux. Dans ces conditions, le coupon libéré se loge généralement dans l'outil de fraisage, mais il peut aussi ne pas y rester emprisonné, et se déplacer librement dans le raccord en T ou, pire, dans la tuyauterie principale. Par ailleurs, la plupart des copeaux s'échappent en toute liberté. Ces déchets libres que constituent le coupon s'il ne reste pas dans la fraise et les copeaux sont la source de plusieurs problèmes. Ils peuvent notamment se déposer sur le clapet ou autre organe d'étanchéité du raccord de dérivation au cours de son installation et en perturber le fonctionnement ultérieur, provoquant ainsi des fui tes de fluide vers l'extérieur. Ils peuvent aussi se loger dans des filetages aménagés sur certaines parties du raccord et non encore utilisés, nuisant ainsi à leur étanchéité future. Ces déchets peuvent également tomber dans la tuyauterie principale et être emportés par le fluide y circulant, qui peut les conduire dans des sections étroites qu'ils risquent d'obstruer, ou à l'intérieur d'appareillages sensibles tels que débimètres, détendeurs, brûleurs, vannes, robinets, pompes, etc., qu'ils risquent de bloquer ou d'endommager. On constate donc qu'il importe de s'assurer de la récupération de tous les déchets.

A cet effet, on a déjà proposé des outils de fraisage dans lesquels on tente de retenir le coupon à l'intérieur de la fraise, comme par exemple dans le brevet US 2 839 075, mais ces systèmes, souvent complexes, ne garantissent généralement pas la capture de tous les déchets.

C'est pourquoi la présente invention vise à fournir un outil de fraisage évitant la dispersion incontrôlée des déchets de perçage, grâce à sa conception particulière permettant la formation d'un copeau unique et sa rétention dans l'outil.

A cette fin, la présente invention concerne un outil de fraisage constitué d'un corps cylindrique comportant un évidement central, qui se caractérise en ce que
l'extérieur du cône communique avec l'évidement central du corps cylindrique par un orifice de section oblongue s'étendant au moins sur toute la hauteur de la paroi du cône; la génératrice de cet orifice contenue dans le plan P passant par le sommet géométrique du cône, de façon à former une arête de coupe substantiellement rectiligne s'étendant au moins du sommet du cône à la périphérie du corps cylindrique de l'outil de fraisage.

Il sera plus commode d'exposer la géométrie de l'outil de fraisage conforme à l'invention en détaillant étape après étape l'un de ses modes préférés de fabrication, à l'aide des figures des dessins annexés, dans lesquels :
- - la fig. 1: est une vue latérale d'une pièce de départ, vue perpendiculairement au plan P;
- - la fig. 2: est une vue de la même pièce une fois transformée en outil de fraisage conforme à l'invention, dans la même orientation mais en coupe (le plan de coupe étant le plan P); cette figure correspond à la coupe A-A indiquée sur la figure 4;
- - la fig. 3: est une vue de profil de l'outil représenté à la fig. 2 (vu de droite, c'est-à-dire après une rotation de 90° vers la gauche autour d'un axe vertical);
- - la fig. 4: est une vue axiale de l'extrémité de l'outil de fraisage;
- - la fig. 5: est une vue en agrandissement de l'extrémité inférieure de la coupe représentée à la fig. 2;
- - la fig. 6: illustre le mode de formation d'un copeau unique lors de l'utilisation de l'outil de fraisage de l'invention;
- - la fig. 7: représente une coupe d'un dispositif de perçage d'une tuyauterie conforme à l'invention, monté sur un élément en T d'un raccord de dérivation (la tuyauterie principale n'a pas été représentée, horizontalement, au bas de la figure);
- - la fig. 8: représente une variante de l'outil de fraisage de l'invention, vu de profil, en coupe selon le plan P, avec une inclinaison telle que la génératrice Q soit horizontale; l'ellipse tracée en pointillés représentant la position finale d'une meule utilisée pour sa production;
- - la fig. 9: représente le même outil après rotation de 90° autour d'un axe vertical, c'est-à-dire dans une position où la projection de la génératrice Q se ramène à un point;
- - la fig. 10: représente une vue de profil du même outil, l'axe (5) du corps cylindrique étant parallèle au plan de la projection.

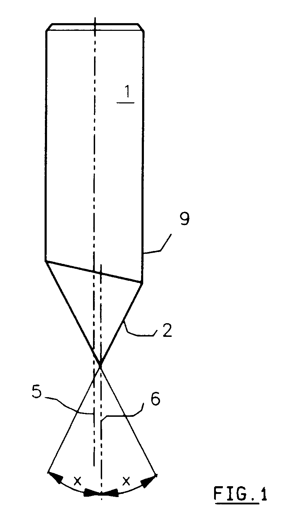

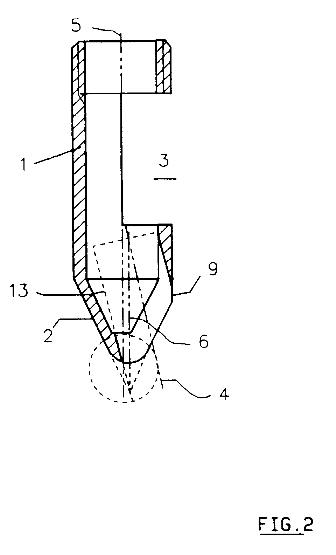

Pour fabriquer un outil de fraisage conforme à l'invention, on peut partir d'un cylindre massif d'un matériau adapté à la fabrication d'outils de coupe, par exemple d'acier. Comme illustré par la figure 1, une extrémité de ce cylindre (1) est tout d'abord usinée en forme de cône (2), par exemple par tournage, l'axe (6) de ce cône étant parallèle à l'axe (5) du cylindre (1) sans que ces deux axes ne soient cependant confondus. L'écart entre ces deux axes est généralement de l'ordre de 0,1 à 20 % du diamètre du cylindre, soit, en général, de l'ordre de 0,1 à 10 mm. L'angle de demi-ouverture (x) de ce cône excentré est généralement de l'ordre de 15 à 60°. La génératrice (9), définie comme étant la génératrice du corps cylindrique (1) la plus proche de l'axe (6) du cône, est contenue dans le plan (P) défini par les axes (5) du corps cylindrique et (6) du cône, plan selon lequel est effectuée la coupe représentée à la figure 2. Le fait que ce cône soit excentré, combiné aux autres caractéristiques de l'outil de fraisage décrites ci-dessus, élimine notamment tout risque de coincement au niveau du cône durant l'utilisation de l'outil de fraisage.

On évide ensuite axialement le centre du cylindre (1) et du cône (2), sans toutefois percer ce dernier. Cet évidement central, qui sert à recueillir les déchets de perçage, peut avoir une forme quelconque; il convient toutefois de veiller à ce que les parois du corps cylindrique (1) et du cône conservent une épaisseur propre à assurer à l'outil de fraisage une résistance mécanique suffisante. Un moyen simple d'évider le cylindre (1) est d'utiliser une fraiseuse dont l'axe coïncide avec celui du cylindre (5).

Une autre manière de réaliser la première étape de la fabrication de l'outil de fraisage de l'invention est d'assembler à un cylindre creux, par exemple par soudage, un cône, creux ou que l'on évide après assemblage, de diamètre inférieur à celui du cylindre; l'assemblage étant tel que les axes du cylindre et du cône soient parallèles mais distincts.

L'extrémité du cône peut ensuite être arrondie, de façon telle que son sommet arrondi (7) se trouve de préférence sur l'axe du corps cylindrique (5).

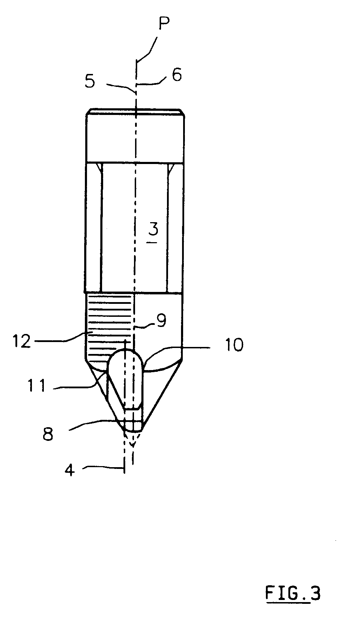

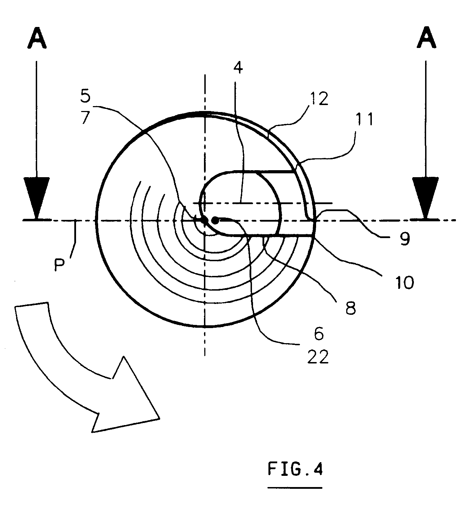

On procède ensuite, dans la paroi du cône, au percement oblique d'un orifice de section oblongue présentant plusieurs caractéristiques. Par souci de simplicité, on considérera qu'il est possible de définir pour ledit orifice un axe unique (4), sans que cela n'implique que sa section soit circulaire. Généralement, comme illustré sur les figures 3 et 4, la section de l'orifice, vue selon son axe de perçage (4), présente la forme de deux demi-cercles raccordés par deux segments de droites parallèles. Un orifice d'une telle section est aisé à réaliser au moyen de machines-outils classiques, par exemple par fraisage.

Selon une première caractéristique, il est nécessaire que cet orifice s'étende au moins sur toute la hauteur de la paroi du cône, comme montré de profil à la fig. 3, c'est-à-dire au moins du sommet du cône à l'endroit où celui-ci rencontre la surface extérieure du corps cylindrique (1), au-delà des deux points (10) et (11), de façon à former une arête de coupe (8) substantiellement rectiligne s'étendant en vue axiale (voir figure 4) jusqu'à la périphérie (10) du corps cylindrique de l'outil de fraisage, sans quoi celui-ci ne pourrait effectuer des découpes de diamètre égal au sien. Cette exigence concerne la hauteur de l'orifice; sa largeur, quant à elle, (mesurée dans un plan perpendiculaire à l'axe (5) du corps cylindrique) est moins critique, généralement de l'ordre de 1 à 10 mm.

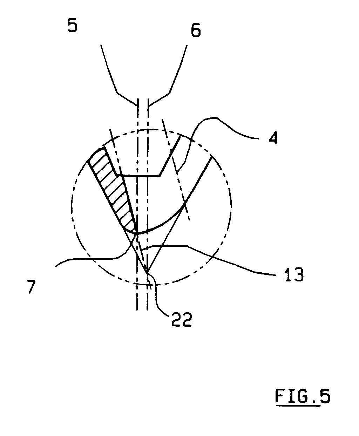

Selon une seconde caractéristique, le percement de cet orifice dans le cône est réalisé de telle façon que la génératrice (13) de cet orifice contenue dans le plan P, comme illustré à la figure 5, passe par le sommet géométrique (22) du cône. De préférence, si l'extrémité du cône a été arrondie, la génératrice (13) passe également par ce sommet arrondi (7), c'est-à-dire par le point où l'axe du corps cylindrique (5) coupe l'extrémité arrondie du cône (2).

Selon une caractéristique optionnelle, l'axe (4) selon lequel le percement de cet orifice s'effectue n'est concourant ni avec l'axe du corps cylindrique (5), ni avec l'axe du cône (6), mais est contenu dans un plan parallèle à un plan (P) qui contient ces deux axes. L'axe (4) de l'orifice percé dans le cône n'est en outre pas parallèle à l'axe du corps cylindrique (5), mais forme avec lui un angle de l'ordre de 10 à 55°. La figure 4, qui montre l'extrémité de l'outil de fraisage en vue axiale et dont la figure 2 représente la coupe A-A, c'est-à-dire selon le plan P, facilite la compréhension de la configuration des différents axes.

On notera que l'axe (4) de l'orifice a été représenté sur les fig. 2 et 5 bien qu'il ne soit pas contenu dans le plan (P) selon lequel cette coupe a été pratiquée; il s'agit en fait de la projection orthogonale de cet axe (4) sur le plan (P), auquel il est parallèle, que l'on a choisi de représenter par souci de clarté.

Le sens de rotation de l'outil de fraisage est défini par les distances séparant respectivement les points (10) et (11), qui sont les points où l'orifice rencontre la courbe d'intersection du corps cylindrique (1) et du cône (2), de la génératrice (9). Des deux arêtes contenant les points d'extrémité (10) et (11), l'arête de coupe est celle dont le point d'extrémité est le plus proche de la génératrice (9). Dans l'exemple de réalisation illustré par les dessins, c'est donc l'arête (8) qui constitue l'arête de coupe, puisque le point (10) situé à son extrémité est plus proche de la génératrice (9) que le point (11) situé à l'extrémité de l'autre arête créée par le percement de l'orifice. La position de l'arête de coupe impose le sens de rotation (de l'arête de coupe vers l'autre), qui est indiqué par une flèche dans la figure 4.

Il est utile de percer, dans la paroi du corps cylindrique (1), une fenêtre (3), dont le bord inférieur est situé à une distance du bord supérieur de l'orifice de section oblongue au moins égale à l'épaisseur maximale des parois à percer. Une telle fenêtre (3) permet d'accéder à l'évidement central et de retirer les déchets accumulés suite à chaque utilisation de l'outil de fraisage. Il convient donc que cette fenêtre ait une forme et des dimensions permettant une vidange commode de l'évidement central de l'outil de fraisage après son utilisation, sans toutefois nuire à sa résistance mécanique. Les figures 2 et 3 représentent à titre d'exemple une telle fenêtre (3) s'étendant sur 180° de la circonférence du corps cylindrique. La forme et les dimensions de la fenêtre sont de préférence telles que la distance séparant son bord supérieur du bord inférieur de l'orifice oblique soit au moins égale à l'épaisseur maximale des parois à percer. Sans cette précaution, il serait possible, lors de l'utilisation de l'outil de fraisage, que le bord inférieur de la fenêtre (3) arrive à une distance de l'axe de la tuyauterie percée inférieure au diamètre intérieur de celle-ci, et dès lors que l'extrémité du copeau formé ressorte du corps cylindrique par la fenêtre, s'engageant ainsi dans la tuyauterie percée et risquant d'être sectionnée et de s'y perdre lors du retrait de l'outil de fraisage. La présence de cette fenêtre (3) n'est toutefois pas indispensable; il serait notamment envisageable, après utilisation de l'outil de fraisage, de récolter les déchets de perçage par l'extrémité supérieure de l'évidement central du corps cylindrique (1).

Afin de réduire les risques de coincement, il est par ailleurs avantageux de ménager, sur un tronçon de la paroi du corps cylindrique s'étendant, dans la direction parallèle à son axe (5), à partir de la ligne d'intersection du cône (2) et du corps cylindrique (1), une dépouille (12) de profondeur progressivement décroissante dans le sens de rotation de l'outil de fraisage, prenant naissance à un endroit situé entre l'arête de coupe (8) et la génératrice (9) du corps cylindrique (1) la plus proche de l'axe (6) du cône. Pour ce faire, comme illustré aux figures 3 et 4, on usine, sur une profondeur faible et décroissante, une portion (12) du corps cylindrique (1), s'étendant sur environ 100 à 200° de sa périphérie, de préférence sur environ 180°. Dans la direction parallèle à l'axe du corps cylindrique (5), cette dépouille a de préférence une hauteur au moins égale à l'épaisseur de la paroi à percer, ce qui élimine tout risque de coincement au niveau du corps cylindrique (1), particulièrement en fin de perçage. La figure 3 représente à titre d'exemple une telle dépouille (12) s'étendant jusqu'au bord inférieur de la fenêtre (3).

Dans un plan circonférentiel, la dépouille ainsi créée dans la partie cylindrique de l'outil de fraisage a une profondeur qui décroît progressivement dans le sens de rotation de l'outil de fraisage, généralement d'une profondeur de l'ordre du millimètre à proximité de la génératrice (9) jusqu'à rejoindre progressivement la surface non usinée du corps cylindrique (1).

Il serait naturellement possible de concevoir un outil de fraisage symétrique à celui représenté dans les dessins, dont le sens de rotation serait forcément inversé. Dans ce cas, contrairement à ce que montrent les dessins, le point (11) serait plus proche de la génératrice (9) que le point (10), et la dépouille (12) se trouverait de l'autre côté de la génératrice (9).

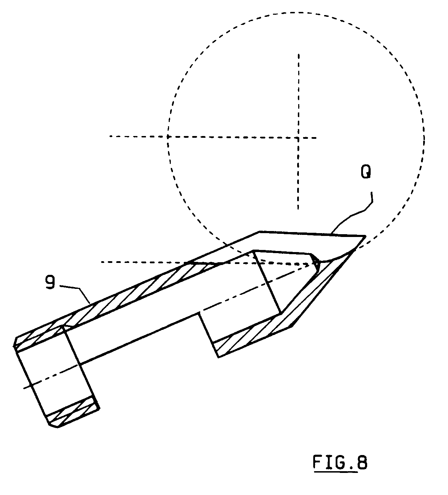

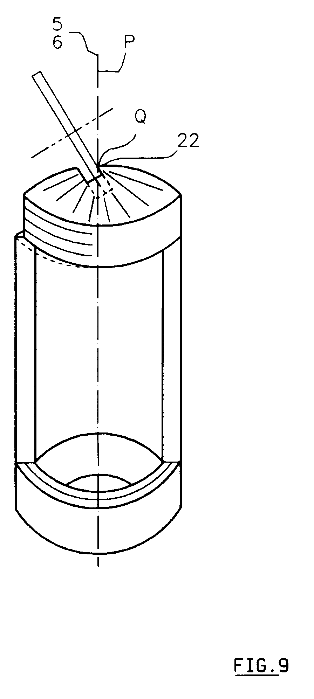

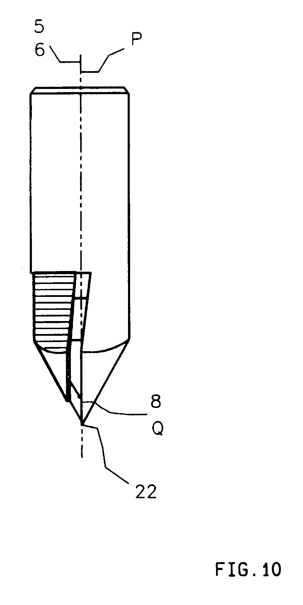

A titre de variante, le perçage d'un orifice de section oblongue dans la paroi du cône peut être réalisé par meulage, conduisant à la formation d'une rainure approximativement parallèle à l'axe du corps cylindrique. A cette fin, on peut utiliser un disque abrasif d'un diamètre de l'ordre de 40 à 100 mm et d'une épaisseur de l'ordre de 2 à 10 mm (inférieure ou égale, et de préférence égale, à la largeur de la rainure à percer, mesurée dans un plan perpendiculaire à l'axe du corps cylindrique), que l'on déplace d'une manière adéquate. Définissons tout d'abord la génératrice Q comme étant la génératrice du cône qui passe par le sommet du cône ainsi que par point de rencontre de la génératrice (9) et du cône. Cette génératrice Q est donc contenue dans le plan P. On déplace la meule de façon à ce que l'une de ses faces se déplace dans un plan contenant la génératrice Q et faisant avec le plan P un angle de l'ordre de 1 à 45°, et de façon telle que le centre de la meule se déplace parallèlement à cette génératrice Q. La distance entre le segment de droite que parcourt le centre de la meule et la génératrice Q qui lui est parallèle est choisie de manière à ce que le bord abrasif de la meule pénètre d'environ 5 à 15 mm dans le cône, en tout état de cause à une profondeur suffisante pour percer la paroi du cône. De manière avantageuse, le meulage se fait en attaquant le corps cylindrique, c'est-à-dire à l'opposé de la partie du corps cylindrique usinée en cône, et non en attaquant le cône lui-même. En effet, il est recommandé, pour des raisons de résistance mécanique, d'interrompre le meulage lorsque le bord abrasif de la meule arrive à une distance du sommet du cône telle que la distance entre ce dernier et le bord inférieur de la rainure le plus proche du sommet du cône soit de l'ordre de 1 à 5 mm. Si l'épaisseur de la meule est inférieure à la largeur de la rainure, plusieurs passages seront nécessaires, la meule étant à chaque passage légèrement décalée parallèlement à son axe. Les figures 8 à 10 illustrent cette variante de méthode de perçage de la paroi du cône, qui est particulièrement facile et rapide à mettre en oeuvre.

On notera que, dans cette variante, la génératrice Q joue le rôle d'arête de coupe (8).

Sur les figures 8 à 10, le sommet du cône n'a pas été arrondi; il peut cependant l'être.

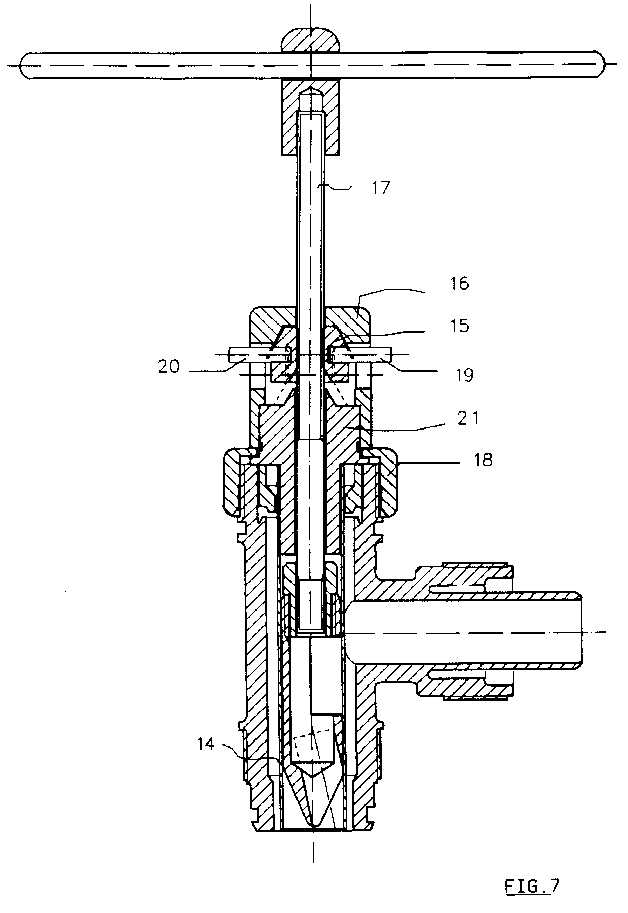

Lors de l'utilisation de l'outil de fraisage de l'invention, il est recommandé, afin de garantir le bon déroulement de l'opération, d'imprimer à l'outil de fraisage un déplacement vertical régulier. A cette fin, on peut utiliser, comme illustré à la figure 7, un dispositif de perçage destiné à être utilisé lors de l'installation d'un raccord de dérivation comportant un élément en T muni d'un dispositif d'obturation, qui se caractérise en ce qu'il comprend un outil de fraisage tel que décrit ci-dessus fixé à l'extrémité d'un arbre (17) dont au moins une partie est filetée et coopère avec une pièce filetée femelle (15), fixe par rapport à la tuyauterie, de manière à imposer à l'outil de fraisage un déplacement axial proportionnel à la rotation de l'arbre (17). Il va sans dire que les filetages en question sont tels que l'outil de fraisage se déplace en direction de la tuyauterie à percer lorsque l'outil de fraisage tourne dans son sens de rotation tel que défini précédemment. Une solution commode est de fixer la pièce filetée (15), directement ou par l'intermédiaire d'une ou plusieurs pièces intermédiaires (16, 18, 21), aux moyens de fixation du dispositif d'obturation de l'élément en T du raccord de dérivation en cours d'installation, lesquels moyens se résument généralement à un filetage. De manière préférée, la conception des éventuelles pièces auxiliaires (16, 18, 21) est telle que celles-ci contribuent, pendant le perçage, à l'étanchéité et au guidage de l'outil de fraisage, et facilitent sa manipulation.

Dans une forme de réalisation particulière, la pièce filetée (15) peut être constituée de deux moitiés symétriques par rapport à l'axe de l'arbre (17), moitiés dont les extrémités supérieures ont substantiellement la forme de demi-cônes tronqués pouvant s'engager dans une cavité de forme similaire aménagée dans l'une des pièces intermédiaires (16). La figure 7 montre clairement une telle cavité, de forme tronconique, aménagée dans la paroi inférieure de la pièce intermédiaire (16). De cette façon, lorsque les deux demi-pièces (15) sont appliquées contre la pièce (16), et donc l'une contre l'autre, par exemple sous l'effet d'une poussée exercée vers le haut (lorsqu'on se réfère à la figure 7) par l'arbre (17), le filetage de ces deux demi-pièces (15) coopère indissociablement avec celui de l'arbre (17). Lors de l'utilisation d'un tel dispositif de perçage, on n'installe les deux demi-pièces (15) en contact intime avec l'arbre (17) qu'après avoir introduit celui-ci, à l'extrémité duquel est fixé l'outil de fraisage, dans la tubulure de l'élément en T du raccord perpendiculaire à la tuyauterie. Il est donc commode, pour ainsi installer les deux demi-pièces (15) en contact avec l'arbre (17), que ces deux demi-pièces soient munies d'appendices (19, 20) manipulables de l'extérieur, passant par exemple au travers d'ouvertures aménagées dans la paroi latérale de la pièce (16), comme illustré à la figure 7. On fait ensuite tourner l'arbre (17) de quelques tours dans le sens de perçage, jusqu'à amener axialement les deux demi-pièces (15) en contact avec la pièce (16), position dans laquelle elles sont indissociables et jouent le rôle d'une pièce filetée unique, qu'elles remplissent pendant toute la durée du perçage. De même, lorsque le perçage de la tuyauterie est terminé, il suffit de faire tourner l'arbre (17) de quelques tours dans le sens opposé à celui utilisé lors du perçage pour que les deux demi-pièces (15) cessent d'être appliquées contre la pièce (16) et puissent être écartées l'une de l'autre, cessant de coopérer avec l'arbre (17) et permettant dès lors un enlèvement du dispositif de perçage tout aussi rapide que son installation.

Lorsqu'on utilise l'outil de fraisage de l'invention au cours de l'installation d'un raccord de dérivation sur une tuyauterie principale (voir fig. 7), on peut l'insérer directement dans la tubulure de l'élément en T perpendiculaire à la tuyauterie. On peut également utiliser un dispositif tel que décrit précédemment comprenant en outre, dans la tubulure de l'élément en T perpendiculaire à la tuyauterie, un tube de guidage (14) de diamètre intérieur légèrement supérieur au diamètre extérieur du corps cylindrique de l'outil de fraisage (1), garantissant à celui-ci un déplacement rectiligne lors du perçage. Un tel tube du guidage (14) empêche en outre l'égarement de déchets de perçage dans l'élément en T, voire dans la canalisation de dérivation. Les dimensions radiales de la tubulure de l'élément en T perpendiculaire à la tuyauterie, de l'éventuel tube de guidage (14) et du corps cylindrique (1) de l'outil de fraisage sont telles que les jeux soient réduits au minimum, sans toutefois conduire à des risques de coincement.

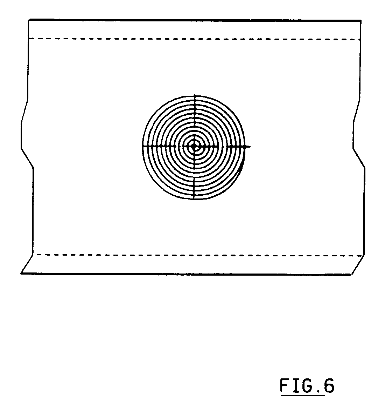

La figure 6 illustre la façon dont le perçage se déroule lors de l'utilisation de l'outil de fraisage de l'invention. La paroi de la tuyauterie principale est d'abord attaquée en son centre par le sommet de l'outil de perçage, et il se forme à partir de ce moment un copeau continu, découpé dans la paroi selon une sorte de spirale, qui vient automatiquement se loger dans l'évidement central de l'outil de fraisage, sans que des déchets de perçage ne soient libérés dans la tuyauterie principale ni dans la canalisation de dérivation. Le fait qu'un copeau unique soit produit lors de l'utilisation de l'outil de fraisage de l'invention représente un avantage considérable par rapport aux systèmes connus, dans lesquels on obtenait d'une part un coupon, dont la capture pouvait certes être tentée avec plus ou moins de succès, mais aussi, d'autre part, de nombreux petits copeaux difficiles à récolter.

La forme de cône excentré donnée à l'extrémité de l'outil de fraisage conforme à l'invention est essentielle à la formation d'un copeau unique, surtout lors du perçage d'orifices dont le diamètre est grand par rapport à celui de la tuyauterie percée. En effet, dans de tels cas, une fraise classique, cylindrique, n'exercerait son action de coupe que pendant une fraction de chaque demi-tour, conduisant à la formation de nombreux copeaux en plus du coupon central. L'arête de coupe de l'outil de fraisage selon l'invention, par contre, est en contact permanent avec la paroi de la tuyauterie percée, quel que soit son diamètre, ce qui garantit la formation d'un copeau unique.

L'outil de fraisage et les dispositifs de perçage décrits ci-dessus s'utilisent de façon particulièrement avantageuse lors de l'installation de raccords de dérivation sur des tuyauteries, notamment sur des tuyauteries en matières plastiques. Les procédés d'installation de raccords de dérivation dans lesquels on utilise ces dispositifs permettent la réalisation simple et sûre de vastes réseaux de tuyauterie, par exemple de réseaux de distribution de gaz naturel. Ce domaine d'application n'est cependant pas restrictif, l'outil de fraisage de l'invention pouvant être utilisé pour percer toute tuyauterie, et même pour le perçage de parois autres que celles de tuyauteries en matières plastiques, notamment pour percer des tuyauteries métalliques ou pour percer des parois non-cylindriques, par exemple planes ou sphériques. Le matériau constitutif de l'outil de fraisage et certaines de ses caractéristiques, telle la configuration précise de l'arête de coupe, devront naturellement être adaptés au matériau à percer, conformément aux méthodes habituellement appliquées dans le domaine de la fabrication d'outils de coupe.

De même, les diverses dimensions indiquées ci-avant ne sont données qu'à titre indicatif, et peuvent éventuellement être adaptées à chaque cas particulier, par application des règles de bonne pratique en matière d'outils de coupe.

## Revendications

1. Outil de fraisage constitué d'un corps cylindrique (1) comportant un évidement central,
l'extrémité du corps cylindrique (1) ètant prolongée par un cône (2) dont l'axe (6) est parallèle à l'axe (5) du corps cylindrique (1) mais excentré par rapport à celui-ci, caractérisé en ce que
l'extérieur du cône (2) communique avec l'évidement central du corps cylindrique (1) par un orifice de section oblongue s'étendant au moins sur toute la hauteur de la paroi du cône; la génératrice (13) de cet orifice contenue dans le plan P passant par le sommet géométrique (22) du cône (2), de façon à former une arête de coupe (8) substantiellement rectiligne s'étendant au moins du sommet du cône à la périphérie (10) du corps cylindrique de l'outil de fraisage.

2. Outil de fraisage selon la revendication 1, dans lequel l'axe (4) de l'orifice de section oblongue est contenu dans un plan parallèle au plan P contenant les axes (5) et (6) sans être parallèle à ceux-ci.

3. Outil de fraisage selon l'une des revendications 1 ou 2, dans lequel l'extrémité du cône (2) est arrondie de telle façon que son sommet arrondi (7) se trouve sur l'axe (5) du corps cylindrique.

4. Outil de fraisage selon la revendication 3, dans lequel la génératrice (13) de l'orifice de section oblongue contenue dans le plan P passe par le sommet arrondi (7) du cône (2).

5. Outil de fraisage selon l'une des revendications précédentes, dans la paroi du corps cylindrique (1) duquel est percée une fenêtre (3), dont le bord inférieur est situé à une distance du bord supérieur de l'orifice de section oblongue au moins égal à l'épaisseur maximale des parois à percer.

6. Outil de fraisage selon l'une des revendications précédentes, dans lequel un tronçon de la paroi du corps cylindrique s'étendant, dans la direction parallèle à son axe (5), à partir de la ligne d'intersection du cône (2) et du corps cylindrique (1), comporte une dépouille (12) de profondeur progressivement décroissante dans le sens de rotation de l'outil de fraisage, prenant naissance à un endroit situé entre l'arête de coupe (8) et la génératrice (9) du corps cylindrique (1) la plus proche de l'axe (6) du cône.

7. Outil de fraisage selon la revendication 6, dans lequel la dépouille (12) a une hauteur, mesurée parallèlement à l'axe (5) du corps cylindrique, au moins égale à l'épaisseur de la paroi à percer.

8. Outil selon l'une des revendications précédentes, dans lequel l'orifice de section oblongue est produit par meulage.

## Claims

1. Milling cutting tool consisting of a cylindrical body (1) which includes a central recess, the end of the cylindrical body (1) being prolonged by a cone (2), the axis (6) of which is parallel to the axis (5) of the cylindrical body (1) but off-centre with respect to the latter, characterized in that the outside of the cone (2) communicates with the central recess of the cylindrical body (1) via an orifice of oblong cross-section extending at least over the entire height of the wall of the cone; and the generatrix (13) of this orifice contained in the plane P passes through the geometrical apex (22) of the cone (2), so as to form a substantially straight cutting edge (8) extending at least from the apex of the cone to the periphery (10) of the cylindrical body of the milling cutting tool.

2. Milling cutting tool according to Claim 1, in which the axis (4) of the orifice of oblong cross-section is contained in a plane parallel to the plane P containing the axes (5) and (6) without being parallel to them.

3. Milling cutting tool according to one of Claims 1 and 2, in which the end of the cone (2) is rounded in such a way that its rounded apex (7) lies on the axis (5) of the cylindrical body.

4. Milling cutting tool according to Claim 3, in which the generatrix (13) of the orifice of oblong cross-section contained in the plane P passes through the rounded apex (7) of the cone (2).

5. Milling cutting tool according to one of the preceding claims, in the wall of the cylindrical body (1) of which a window (3) is drilled, the lower edge of which is located at a distance from the upper edge of the orifice of oblong cross-section at least equal to the maximum thickness of the walls to be drilled.

6. Milling cutting tool according to one of the preceding claims, in which a length of the wall of the cylindrical body extending, in the direction parallel to its axis (5), from the line of intersection of the cone (2) with the cylindrical body (1), includes a clearance (12) of depth progressively decreasing in the direction of rotation of the milling cutting tool, starting at a place located between the cutting edge (8) and the generatrix (9) of the cylindrical body (1) closest to the axis (6) of the cone.

7. Milling cutting tool according to Claim 6, in which the clearance (12) has a height, measured parallel to the axis (5) of the cylindrical body, at least equal to the thickness of the wall to be drilled.

8. Tool according to one of the preceding claims, in which the orifice of oblong cross-section is produced by grinding.

## Patentansprüche

1. Fräswerkzeug, bestehend aus einem zylindrischen Körper (1) mit einer zentralen Aussparung, wobei das Ende des zylindrischen Körpers durch einen Kegel (2) verlängert ist, dessen Achse (6) parallel zur Achse (5) des zylindrischen Körpers liegt, jedoch in Relation zu dieser exzentrisch ist,
dadurch gekennzeichnet,
daß die Außenseite des Kegels (2) durch eine Öffnung mit länglichem Querschnitt, die sich zumindest über die gesamte Höhe der Kegelwand erstreckt, mit der zentralen Aussparung des zylindrischen Körpers (1) in Verbindung steht, und daß die in der Ebene P enthaltene Erzeugende (13) dieser Öffnung durch den geometrischen Scheitel (22) des Kegels (2) derart verläuft, daß dadurch eine Schneidkante (8) gebildet wird, die sich im wesentlichen geradlinig zumindest vom Scheitel des Kegels bis zum Umfang (10) des zylindrischen Körpers des Fräswerkzeuges erstreckt.

2. Fräswerkzeug nach Anspruch 1,
wobei die Achse (4) der Öffnung mit länglichem Querschnitt in einer Ebene parallel zu der Ebene P liegt, die die Achsen (5) und (6) enthält, ohne daß sie parallel zu diesen verläuft.

3. Fräswerkzeug nach einem der Ansprüche 1 oder 2,
wobei das Kegelende (2) derart abgerundet ist, daß sich seine abgerundete Spitze (7) auf der Achse (5) des zylindrischen Körpers befindet.

4. Fräswerkzeug nach Anspruch 3,
wobei die Erzeugende (13) der in der Ebene P enthaltenen Öffnung mit länglichem Querschnitt durch die abgerundete Spitze (7) des Kegels (2) hindurchgeht.

5. Fräswerkzeug nach einem der vorhergehenden Ansprüche,
wobei die Wand des zylindrischen Körpers (1) von einem Fenster (3) durchsetzt ist, dessen unterer Rand in einem Abstand vom oberen Rand der Öffnung mit länglichem Querschnitt angeordnet ist, der wenigstens gleich der maximalen Dicke der zu durchdringenden Wände ist.

6. Fräswerkzeug nach einem der vorhergehenden Ansprüche,
wobei sich ein Teilstück der Wand des zylindrischen Körpers, das sich in der Richtung parallel zu seiner Achse (5) von der Schnittlinie zwischen dem Kegel (2) und dem zylindrischen Körper (1) erstreckt, und eine Hinterschneidung (12) mit einer in Drehrichtung des Fräswerkzeuges fortschreitend abnehmenden Tiefe aufweist, die an einem Ort entsteht, der sich zwischen der Schneidkante (8) und der der Achse (6) des Kegels am nächsten liegenden Erzeugenden (9) des zylindrischen Körpers (1) befindet.

7. Fräswerkzeug nach Anspruch 6,
wobei die Hinterschneidung (12) eine parallel zur Achse (5) des zylindrischen Körpers, gemessene Höhe aufweist, die wenigstens gleich der Dicke der zu durchdringenden Wand ist.

8. Werkzeug nach einem der vorhergehenden Ansprüche,
wobei die Öffnung mit länglichem Querschnitt durch Schleifen hergestellt ist.
